Europäisches Patentamt

European Patent Office

Office européen des brevets

(11) Publication number : **0 477 082 A2**

## (12) EUROPEAN PATENT APPLICATION

(21) Application number : **91402456.7**

(51) Int. Cl.⁵ : **B60K 28/16, F16H 61/02**

(22) Date of filing : **16.09.91**

(30) Priority : **17.09.90 JP 243875/90**

(43) Date of publication of application :
**25.03.92 Bulletin 92/13**

(84) Designated Contracting States :
**DE FR GB**

(71) Applicant : **NISSAN MOTOR COMPANY LIMITED**
**No. 2, Takara-cho, Kanagawa-ku**
**Yokohama-city, Kanagawa-prefecture (JP)**

(72) Inventor : **Imaseki, Takashi**
**2-A Heim Yamanone, 8-4, Yamanone 3-Chome**
**Zushi City, Kanagawa Prefecture (JP)**
Inventor : **Tamura, Minoru**
**4-1 Nakashirane, Asahi-Ku**
**Yokohama City, Kanagawa Prefecture (JP)**

(74) Representative : **Berger, Helmut et al**
**Cabinet Z. WEINSTEIN 20, avenue de Friedland**
**F-75008 Paris (FR)**

(54) Traction control system for automotive vehicle.

(57)    A traction control system for an automotive vehicle is responsive to an excessive magnitude of wheel slippage to lower driving torque supplied to driving wheels (14) for resuming sufficient level of tire/road traction. The traction control system includes a catalyzer temperature sensor (20) for monitoring a catalyzer in exhaust system of an automotive vehicle, to produce a catalyzer temperature indicative signal. A control unit (10) in the traction control system is responsive to the catalyzer temperature indicative signal as it represents a catalyzer temperature in excess of a predetermined catalyzer temperature criterion, to inhibit an engine output control mode operation in which adjustment for an engine output is controlled, and to initiate a transmission control mode operation in which a transmission speed ratio of an automatic power transmission (16) is shifted-up to lower the driving torque supplied to the driving wheels.

EP 0 477 082 A2

FIG_1

The present invention relates to a traction control system for an automotive vehicle, which is designed for maintaining wheel slippage at an optimal level. More particularly, the invention relates to a traction control system which employs technologies for reducing engine output at the occurrence of unacceptable magnitude of wheel slippage.

It is a current trend to provide a traction control capability for an automotive vehicle in order to prevent driving wheels from causing unacceptable magnitude of wheel slippage, such as wheel spinning during sudden acceleration. Such traction control technology generally adjusts engine output torque transmitted to the driving wheels thereby to maintain wheel slippage substantially at an optimal level.

Various approaches have been taken for adjusting distribution of the engine output torque to the driving wheels for the purpose of traction control. For instance, a typical approach for performing traction control is to adjust the engine output torque depending upon the road/tire traction level or the magnitude of wheel slippage. Thus, there has been proposed a system which is to control fuel supply for adjusting the engine output toroue by performing fuel cut-off or by controlling air/fuel ratio. Another system is also known which is to perform adjustment of the engine output by adjusting air induction through a throttle valve servo mechanism, which may also cause variation of the air-/fuel ratio from a stoichiometric value.

The traction control system according to the above-mentioned proposals are generally effective in providing an improved road/tire traction for efficiently transmitting driving torque of the engine to the road surface with less power loss, thereby achieving an enhanced vehicle driving performance. However, the traction control performed by engine driving parameter which is influential on air/fuel ratio may be accompanied by problems as follows.

Namely, in such type of traction control system, when traction control becomes active in response to an excessive magnitude of wheel slippage, air/fuelratio is adjusted to be leaner so as to reduce the engine output torque. Furthermore, when the traction control is performed by cutting-off the fuel, the fuel cut-off operation may take place periodically or continuously depending upon the magnitude of wheel slippage. In either case, oxygen concentration in the exhaust gas is increased as a result of the traction control. Such increased oxygen concentration in the exhaust gas may cause an elevated temperature of a catalytic converter to accelerate fatigue of the catalyzer and thereby invite emission problems. In the worst case, the increased amount of oxygen in the exhaust gas may cause after-firing in the catalytic converter to detrimentally damage the same.

Therefore, it is an object of the present invention to provide an improved traction control system for an automotive vehicle, which is capable of effectively solving the foregoing problems in the prior art.

More specific object of the present invention is to provide a traction control system, which generally performs adjustment of delivery of driving torque for driving wheels by controlling the engine output in such a manner that damage of catalytic converter can be positively avoided, and which yet provides an enhanced performance in the traction control.

To achieve these and other objects, a traction control system in accordance with the present invention includes a catalyzer temperature sensor for monitoring a catalyzer in an exhaust system of an automotive vehicle, to produce a signal representing the catalyzer temperature. A control unit of the traction control system is responsive to the signal representing the catalyzer temperature, and is operative as the catalyzer temperature exeeds a predetermined catalyzer temperature criterion to inhibit an engine output control mode operation in which adjustment for an engine output is controlled, and initiating a transmission control mode operation in which a transmission speed ratio of an automatic power transmission is shifted-up to lower the driving torque to be supplied to driving wheels.

According to one aspect of the invention, there is provided a traction control system for an automotive vehicle, which comprises:

first means for monitoring wheel slippage condition of a driving wheel which is coupled with an internal combustion engine and supplied with a driving torque from the engine through a power train including an automatic power transmission, and for providing a wheel slippaqe indicative signal;

second means for monitoring a temperature condition of an exhaust gas purifier in an exhaust system of the enqine, and for providing a temperature indicative signal; and

third means, responsive to said wheel slippage indicative signal typically as it exceeds a predetermined wheel slippage criterion, for initiating a traction control by selectively performing first and second control mode operations, said third means normally performing the first control mode operation to adjust an engine driving parameter and control the output torque of the engine, and performing the second control mode operation while inhibiting the first control mode operation when said temperature indicative signal represents that the temperature of said exhaust gas purifier exceeds a predetermined temperature criterion, to shift-up transmission speed ratio of said automatic power transmission and lower the driving torque to be supplied to said driving wheel.

According to another aspect of the invention, there is provided a traction control system for an automotive vehicle, which comprises:

wheel slippage detecting means for monitoring wheel slippage condition of a driving wheel coupled with an internal combustion engine and supplied with a driving torque from the engine through a power train including an automatic power transmission, and for providing a wheel slippage indicative signal;

catalyzer temperature detecting means for monitoring a temperature condition of a catalyzer provided for a catalytic converter in an exhaust system of the engine, and for providing a temperature indicative signal; and

control means, responsive to said wheel slippage indicative signal typically as it exceeds a predetermined wheel slippage criterion, for initiating a traction control operation by selectively performing first and second mode operations, said control means normally performing a first control mode operation to adjust an engine operation and control the output torque of the engine, and performing a second control mode operation while inhibiting said first control mode operation when said temperature indicative signal represents a temperature of said exhaust qas purifier in excess of a predetermined temperature criterion, to shift-up transmission speed ratio of said automatic power transmission and lower the driving torque to be supplied to said driving wheel.

According to still another aspect of the invention, there is provided a traction control system for an automotive vehicle, which comprises:

a first wheel speed sensor for monitoring wheel speed of a driving wheel coupled with an internal combustion engine and supplied with driving torque from the engine through an automatic power transmission, for producing a first wheel speed indicative signal;

a second wheel speed sensor for monitoring wheel speed of a driven wheel which is free from said internal combustion engine and producing a second wheel speed indicative signal;

a catalyzer temperature sensor for monitoring temperature condition of a catalyzer in a catalytic converter and producing a catalyzer temperature indicative signal; and

control means for receiving said first and second-wheel speed indicative signals and deriving a wheel slippage of the driving wheel, said control means selectively performing a first mode traction control operation for adjusting the engine output torque, and a second mode traction control operation for adjusting supply of the driving torque to said driving wheel across said automatc power transmission depending upon the temperature condition of said catalyzer represented by said catalyzer temperature indicative signal.

For a better understanding of the invention, reference is taken to the accompanying drawings, in which:

Fig. 1 is a schematic block diagram showing the general concept of a traction control system in accordance with the present invention;

Fig. 2 is a schematic diagram showing the preferred embodiment of a traction control system according to the invention; and

Fig. 3 is a flowchart of a traction control program to be executed by a control unit in the traction control system of Fig. 2.

Referring now to the drawings, in particular to Fig, 1, the general concept of a traction control system according to the present invention will be briefly explained below.

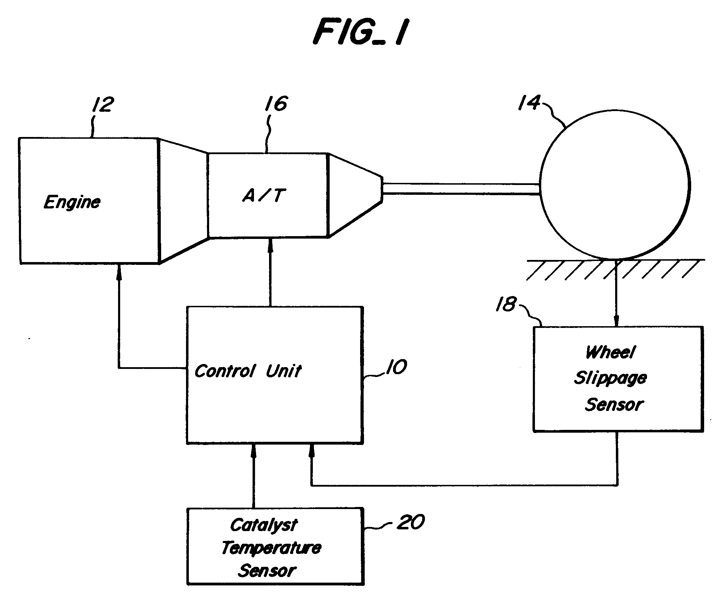

As shown in Fig. 1, the traction control system according to the invention includes a control unit 10 which is operable in mutually distinct two operational modes; an engine output control mode and a transmission control mode. The control unit 10 selectively performs the engine output control mode operation and the transmission control mode operation, to adjust the magnitude of driving torque of an internal combustion engine 12 to be supplied to driving wheels 14 via a power train which includes an automatic power transmission 16.

As known in the art, the automatic power transmission 16 in the preferred embodiment is associated with an electronic transmission control system which controls transmission speed ratio, shift timing and so forth depending upon the vehicle driving condition. The transmission control system may have capability of providing a shift control signal which commands shifting of the transmission speed ratio to a desired speed ratio and which is supplied to electromagnetically of electrically operable valvo units employed in the transmission assembly.

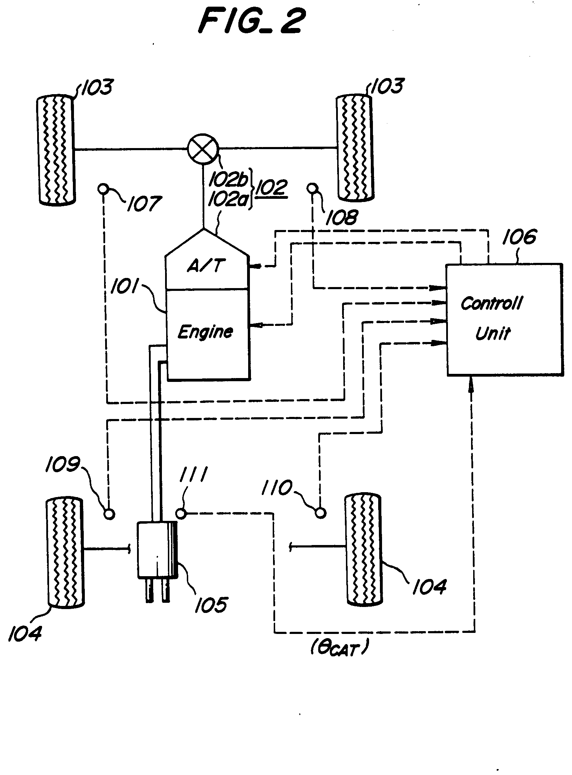

The control unit 10 normally produces a first traction control signal thereby performing the engine output control mode operation for controlling the engine operation and adjust the output torque of the engine. The engine output control mode operation of the control unit 10 may be performed by any one of known approaches as mentioned hereinbefore. For instance, the engine output torque can be reduced by adjusting the air/fuel mixture so as to be leaner, or by performing fuel cut-off operation to periodically or continuously cut-off the fuel supply to an induction system of the engine 12. On the other hand, in the case of elevated temperature of a catalyzer provided for a catalytic converter (Fig. 2) in the exhaust system of the engine 12, the control unit 10 produces a second traction control signal thereby performing the transmission control mode, for commanding shifting-up of the transmission speed ratio to lower the driving torque to be supplied to the driving wheel 14 via the final drive of the power train.

In the illustrated embodiment, the control unit 10 is so programmed as to normally provide a higher priority for the engine output control mode operation rather than the transmission control mode operation, Thus, the engine output control mode operation normally takes place to perform the traction control. Furthermore, by detecting elevated catalyzer temperature, the control unit 10 inhibits the engine output control mode operation while initiating the transmission control mode operation

More particularly, the control unit 10 is connected to a wheel slippage sensor 18 which monitors wheel slippage at the driving wheel 14 for providing a wheel slippage indicative signal. The control unit 10 generally detects excessive magnitude of the wheel slippage on the basis of a wheel slippage indicative signal level in excess of a predetermined wheel slippage threshold level to initiate a traction control operation. The control unit 10 is also connected to a catalyzer temperature sensor 20 which monitors the temperature of the catalyzer to produce a catalyzer temperature indicative signal. The control unit 10 is responsive to the catalyzer temperature indicative signal from the catalyzer temperature sensor 20, and switches the operational mode from the engine output control mode to the transmission control mode when the catalyzer temperature indicative signal level exceeds a predetermined catalyzer temperature threshold level.

With the construction of the system as set forth above, by inhibiting the engine output control mode operation while the catalyzer temperature is higher than a catalyzer temperature criterion as represented by the catalyzer temperature threshold level, it is possible to effectively prevent overheating of the catalyzer which would otherwise bring damages or accelerated fatigue of the catalyzer to deteriorate the exhaust gas purification performance. Also, the transmission control mode operation becomes active while the engine output mode operation is inhibited, so that the magnitude of the driving torque to be delivered to the driving wheel 14 can still be adjusted for maintaining the wheel slippage substantially at an optimum level.

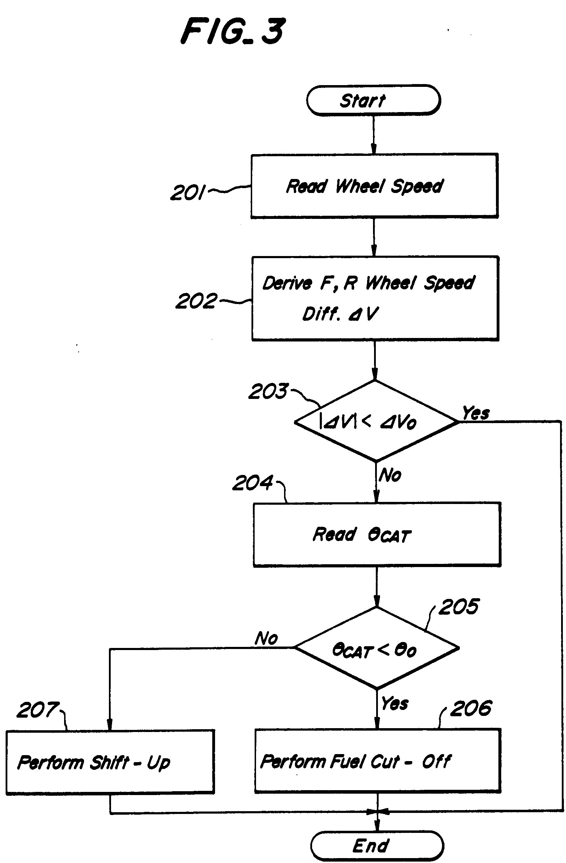

Practical embodiment of the traction control system according to the present invention will now be explained below with reference to Figs. 2 and 3. As shown in Fig. 2, the preferred embodiment of the traction control system according to the invention is applied to an automotive vehicle which is of a so-called front engine/front wheel drive type. Thus, the automotive vehicle incorporates an internal combustion engine 101 and a power train layout including an automatic transaxle 102 for driving two front wheels 103. The front wheels 103 are driving wheels to which the driving torque of the engine 101 is delivered, and the rear wheels 104 are driven wheels which are free from the engine driving torque. Of course, while the preferred embodiment of the invention is discussed in terms of a specific power train layout, the present invention can be applied to different types of power train layout including rear wheel drive type, four wheel drive type, etc.

In the illustrated embodiment, the automatic transaxle 102 corrects the engine 101 to the driving wheels 103, and includes an automatic power transmission 102a and a differential gear unit 102b. The engine 101 employed in the illustrated embodiment may be four cylinder or six cylinder engine, without limitation, and has an exhaust system including a catalytic converter 105 provided with a catalyzer. The engine 101 is associated with a control unit 106 which is in the form of a microprocessor-based unit for performing, for example, engine control, traction control, transmission control and so forth in a time sharing manner.

Among others, the control unit 106 performs an engine control mode operation for controlling various engine driving parameters, such as fuel supply amount, fuel injection timing, spark ignition timing and so forth. These engine driving parameters are controlled on the basis of various engine control parameters, such as engine load as represented by an air flow rate or throttle opening degree, engine speed, oxygen concentration in exhaust gas and so forth. Manner and/or process of such engine control, *per se*, is well known in the art so that a detailed explanation in this regard would be unnecessary. However, it should be noted that the illustrated embodiment of the traction control systems may be applicable to any types of engine control systems for controlling engine operating parameters which are influential directly or indirectly on the temperature of the catalyzer of the catalytic converter 105.

In the illustrated embodiment, the control unit 106 as operated in the engine control mode effects the traction control by performing a fuel cut-off for adjusting the engine output torque. Again, it should be noted that while the following discussion is related to the engine output control mode operation in the traction control operation and focused on the fuel cut-off operation, a substantially equivalent adjustment of the engine output may be achieved by various engine parameter control, such as air/fuel ratio control, fuel injection control, air flow rate control and so forth.

The automatic power transmission 102a in the automatic transaxle 102 includes known transmission speed ratio shifting arrangement, such as control valves, shift solenoids and so forth associated with a hydraulic control circuit. The shift solenoids are connected to the control unit 106 to receive transmission control signals therefrom and perform various shift control operation. Of course, it is also possible for the control unit 106 to control a lock-up clutch in the torque converter for operating the torque converter in either converter mode or lock-up mode. for performing the transmission control mode operation, the control unit 106 receives various transmission control parameters, including a vehicle speed indicative signal from a vehicle speed sensor and so forth. Manner and/or process of such transmission control, *per se*, is also known in the art so that a detailed explanation in this regard would be unnecessary.

Briefly stated, the transmission control is performed generally based on the vehicle speed and the throttle valve opening angle as a parameter reflecting the engine load and, hence, the driver's demand for the engine speed. Various parameters may also be taken into account in controlling the transmission speed ratio in the automatic power transmission 102.

The control unit 106 as operated to perform the transmission control mode operation produces a transmission control signal for operating the shift solenoids and so forth, to cause variation of combination of various frictional elements in the transmission assembly and thereby establish the desired transmission speed ratio for optimizing the vehicle driving performance.

For instance, when the transmission control parameters are the throttle valve opening degree and the vehicle speed, the control unit 106 derives an optimal transmission speed ratio at the instantaneous vehicle driving condition represented by the transmission control parameters. The control unit 106 then outputs the transmission control signal commanding shifting to the optimal transmission speed ratio to the shift solenoid and so forth. The shift solenoids are thus operated to change the paths for the line pressures so as to cause variation of states of the friction elements, such as clutches, band brakes and so forth to establish the commanded transmission speed ratio.

The control unit 106 is connected to wheel speed sensors 107, 108, 109 and 110 to receive therefrom wheel speed indicative signals which represent the rotational speed of respective wheels 103 and 104. In the illustrated arrangement, the wheel speed indicative signals from the rear wheel speed sensors 109, 110 provide a data which represents the vehicle body speed. The difference between the wheel speed indicative signals from the front wheel speed sensors 107, 108 and the wheel speed indicative signal from the rear wheel speed sensors 109, 110 represents the wheel slippaqe caused on the front driving wheels 103. The control unit 106 is also connected to a catalyzer temperature sensor 111 to receive therefrom a catalyzer temperature indicative signal $\theta_{CAT}$, which represents the temperature of the catalyzer of the catalytic converter 105 as monitored.

In general, the control unit 106 receives the wheel speed indicative signals from the wheel speed sensors 107, 108, 109 and 110 for deriving the instantaneous magnitude of wheel slippage. Various manners of deriving the wheel slippage based on the wheel speed indicative signals from the wheel speed sensors 107, 108, 109 and 110 have been known in the art. For instance, the wheel slippage at the driving wheel can also be derived by comparing an average front wheel speed which can be derived from the wheel speed indicative signal levels of the front wheel speed sensors 107 and 108, and an average rear wheel speed which can be derived from the wheel speed indicative signal levels from the rear wheel speed sensors 109 and 110.

It should be noted that while the illustrated embodiment employs four wheel speed sensors, it is not essential for the invention to monitor the wheel speed of respective wheels independently of the others. For instance, in the illustrated embodiment, it is possible to monitor the average wheel speed of the driving front wheels 103 by detecting the rotational speed at the input of the countershaft in the automatic transaxle 102. Furthermore, instead of employing the wheel speed of the driven rear wheels 104 as a parameter representing the vehicle body speed, it is of course possible to directly measure the vehicle speed itself by employing appropriate sensor, such as ultrasonic sensor, doppler sensor and so forth.

The control unit 106 compares the wheel slippage magnitude thus derived with a wheel slippage threshold which represents a criterion of an acceptable wheel slippage. When the derived wheel slippage magnitude exceeds the wheel slippage threshold, initiation of the traction control is determined. Then, the control unit 106 checks the catalyzer temperature data derived from the catalyzer temperature indicative signal from the catalyzer temperature sensor 111. The check is performed by comparing the catalyzer temperature data with a catalyzer temperature threshold which represents a criterion of an acceptable catalyzer temperature. The control unit 106 is so prograammed as to normally perform the engine output control mode operation to adjust the engine output torque by performing fuel cut-off operation as long as the catalyzer temperature $\theta_{CAT}$ is maintained at an acceptable range as defined by the catalyzer temperature criterion. When the catalyzer temperature data in excess of the catalyzer temperature threshold is detected, the control unit 106 inhibits the engine output control mode operation so as to prevent the catalyzer from causing overheating. Simultaneously, the control unit 106 initiates the transmission control mode operation for commanding shifting-up of the transmission speed ratio to lower the driving torque to be derived to the driving wheels.

Practical process of the traction control as performed by the control unit 106 is illustrated in Fig. 3 in the form of a flowchart. The traction control routine may be programmed as one of an interrupt routine to be executed periodically at a given timing, e.g. every 20 ms as governed by main and background programs.

In the illustrated routine, immediately after starting execution, the wheel speed indicative data derived from the wheel speed indicative signals from the respective wheel speed sensors 107, 108, 109 and 110 are read out at a step 201. As known in the art, the wheel speed-indicative signal generated by a wheel speed sensor is generally a pulse train having a frequency proportional to the peripheral speed of the wheel. Therefore, the wheel speed indicative data can be generally derived through a frequency-to-voltaqe conversion process known, *per se*. Various manner of deriving wheel speed data in digital form from the wheel speed indicative signal in the form of a pulse train are known in the art. Any technology for converting the pulse data to the digital data can be employed in the practical implementation of the illustrated embodiment.

Then, at a step 202, a front and rear wheel speed difference $\Delta V$ is derived on the basis of the wheel speed indicative signals which have been read out, by subtracting from the front wheel speed the rear wheel speed as representative of the vehicle body speed. The absolute value $|\Delta V|$ is subsequently compared with the wheel slippage threshold $\Delta V_0$, at a step 203. When the absolute value $|\Delta V|$ is smaller than the wheel slippage threshold $\Delta V_0$, judgement can be made that the wheel slippage magnitude is maintained within the acceptable range and does not require traction control. In such case, the process goes directly to END. On the other hand, when the absolute value $|\Delta V|$ is greater than or equal to the wheel slippage threshold $\Delta V_0$, judgement can be made that the wheel slippage magnitude is out of the acceptable range and thus requires the traction control to be performed.

In the latter case, at a step 204, the catalyzer temperature indicative data $\theta_{CAT}$, which is derived by analog-to-digital conversion of the catalyzer temperature indicative signal from the catalyzer temperature sensor 111 is real out. The catalyzer temperature indicative data $\theta_{CAT}$, is then compared with the catalyzer temperature threshold $\theta_0$ at a step 205.

When the catalyzer temperature indicative data $\theta_{CAT}$ is smaller than the catalyzer temperature threshold $\theta_0$ the process goes to a step 206 to perform fuel cut-off for reducing engine output torque in the engine output control mode operation. Thus, for instance, it is possible either to perform a partial fuel cut-off in which fuel cut-off is carried out only for predetermined engine cylinders, or to periodically perform fuel cut-off for all cylinders.

On the other hand, when the catalyzer temperature indicative data $\theta_{CAT}$, is greater than or equal to,the catalyzer temperature threshold $\theta_0$, the process goes to a step 207 to generate a shift-up command signal for shifting-up the transmission speed ratio to a subsequently higher speed ratio so as to lower the driving torque to be supplied to the driving wheels, in the transmission control mode operation.

As can be appreciated from the foregoing detailed description, the present invention serves to effectively prevent the catalyzer from overheating during traction control operation without deteriorating the performance of the traction control.

**Claims**

1. A traction control system for an automotive vehicle, comprising:

     first means for monitoring wheel slippage condition of a driving wheel which is coupled with an internal combustion engine and supplied with a driving torque from the engine through a power train including an automatic power transmission, and for providing a wheel slippage indicative signal;

     second means for monitoring a temperature condition of an exhaust gas purifier in an exhaust system of the engine, and for providing a temperature indicative signal; and

     third means, responsive to said wheel slippage indicative signal, for initiating a traction control by selectively performing a first and a second control mode operations, said third means normally performing the first control mode operation to adjust an engine driving parameter and control the output torque of the engine, and performing the second control mode operation while inhibiting the first control mode operation when said temperature indicative signal represents that the temperature of said exhaust gas purifier exceeds a predetermined temperature criterion, to shift-up transmission speed ratio of said automatic power transmission and lower the driving torque to be supplied to said driving wheel.

2. A traction control system as set forth in claim 1, wherein said third means performs said first control mode operation by adjusting air/fuel ratio of air/fuel mixture to be supplied to said internal combustion engine.

3. A traction control system as set forth in claim 1, wherein said third means performs said first control mode operation by adjusting fuel delivery for said engine.

4. A traction control system as set forth in claim 3, wherein said third means performs fuel cut-off operation during said first control mode operation.

5. A traction control system as set forth in claim 4, wherein said third means performs fuel cut-off operation for a limited number of engine cylinders.

6. A traction control system for an automotive vehicle, comprising:

     wheel slippage detecting means for monitoring wheel slippage condition of a driving wheel coupled with an internal combustion engine and supplied with a driving torque from the engine through a power train including an automatic power transmission, and for providing a wheel slippage indicative signal;

catalyzer temperature detecting means for monitoring a temperature condition of a catalyzer provided for a catalytic converter in an exhaust system of the engine, and for providing a temperature indicative signal; and

control means, responsive to said wheel slippage indicative signal, for initiating a traction control operation by selectively performing a first and a second mode operations, said control means normally performing a first control mode operation to adjust an engine operation and control the output torque of the engine, and performing a second control mode operation while inhibiting said first control mode operation when said temperature indicative signal represents a temperature of said exhaust gas purifier in excess of a predetermined temperature criterion, to shift-up transmission speed ratio of said automatic power transmission and lower the driving torque to be supplied to said driving wheel.

7. A traction control system for an automotive vehicle comprising:

a first wheel speed sensor for monitoring wheel speed of a driving wheel coupled with an internal combustion engine and supplied with driving torque from the engine through an automatic power transmission, for producing a first wheel speed indicative signal;

a second wheel speed sensor for monitoring wheel speed of a driven wheel which is free from said internal combustion engine and producing a second wheel speed indicative signal;

a catalyzer temperature sensor for monitoring temperature condition of a catalyzer in a catalytic converter and producing a catalyzer temperature indicative signal; and

control means for receiving said first and second wheel speed indicative signals and deriving a wheel slippage of the driving wheel, said control means selectively performing a first mode traction control operation for adjusting the engine output torque, and a second mode traction control operation for adjusting supply of the driving torque to said driving wheel across said automatic power transmission depending upon the temperature condition of said catalyzer represented by said catalyzer temperature indicative signal.

FIG_1

EP 0 477 082 A2

# FIG_2

# FIG. 3

```
                    ┌─────────────┐
                    │    Start    │
                    └─────────────┘
                           │
                           ▼
        ┌──────────────────────────────────┐
  201 ──│        Read Wheel Speed          │
        └──────────────────────────────────┘
                           │
                           ▼
        ┌──────────────────────────────────┐
        │    Derive F, R Wheel Speed       │
  202 ──│          Diff. ΔV                │
        └──────────────────────────────────┘
                           │
                           ▼
  203 ──        ◇ |ΔV| < ΔV₀ ◇  ───── Yes ──┐
                           │                │
                          No                │
                           ▼                │
  204 ── ┌──────────────────────────────┐  │
         │         Read θCAT            │  │
         └──────────────────────────────┘  │
                           │                │
                           ▼          205   │
        No ──◇   θCAT < θ₀   ◇              │
         │                 │               │
         │                Yes   206        │
         ▼                  ▼               │
  207 ──┌──────────────┐  ┌──────────────────┐ │
        │Perform Shift-Up│ │Perform Fuel Cut-Off│ │
        └──────────────┘  └──────────────────┘ │
                 │               │             │
                 └───────────────┼─────────────┘
                                 ▼
                    ┌─────────────┐
                    │     End     │
                    └─────────────┘
```

Read Wheel Speed

Derive F, R Wheel Speed Diff. $\Delta V$

$|\Delta V| < \Delta V_0$

Read $\theta_{CAT}$

$\theta_{CAT} < \theta_0$

Perform Shift - Up

Perform Fuel Cut - Off